# EUROPEAN PATENT SPECIFICATION

(11) **EP 1 881 886 B1**
(45) Date of publication and mention of the grant of the patent: **02.12.2009**
(21) Application number: 06755066.5
(22) Date of filing: 08.05.2006
(51) Int. Cl.: B28B 7/44, B29C 67/24

(54) **METHOD AND PLANT FOR MANUFACTURING BLOCKS OF CONGLOMERATE STONE OR CERAMIC MATERIAL**
VERFAHREN UND ANLAGE ZUR HERSTELLUNG VON BLÖCKEN AUS KONGLOMERATSTEIN- ODER -KERAMIKMATERIAL
PROCEDE ET USINE DESTINES A LA FABRICATION DE BLOCS DE ROCHE OU DE CERAMIQUE AGGLOMEREE

(30) Priority: 19.05.2005 IT TV20050068
(43) Date of publication of application: 30.01.2008
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Agostini, Agostino
(86) International application number: PCT/EP2006/062120
(87) International publication number: WO 2006/122892

(56) References cited:
- WO-A-00/43192
- DE-A1- 1 584 545
- DE-A1- 2 437 411

## Description

### BACKGROUND OF THE INVENTION

The present invention relates to the manufacture of articles in the form of blocks of conglomerate material and, more specifically, to a method and a plant for manufacturing articles in the form of blocks which can be sawn so as to form slabs.

For many years a technology for manufacturing blocks obtained from an initial mix formed by a granulated stone (in particular marble, granite) or stone-like material or ceramic material and an organic binder (a hardening resin) or an inorganic (cementitious) binder has been known; according to this technology the mix is charged into a formwork of suitable dimensions and undergoes a vacuum vibrocompression operation and then passes to a hardening step using a procedure which depends specifically on the nature of the binder.

Italian patent No. 1,181,570 (**corresponding to** US patent No. 4,698,010) describes a method and a plant of this kind and envisages that the step of mixing the initial mix is also performed under a vacuum.

Italian patent No. 1,242,777 (**corresponding to German patent No.** 4 140 021) in turn describes a method and an apparatus operating at atmospheric pressure, for the preparation of mixes of stone or ceramic material aggregates, involving in particular the combination of at least two basic mixes which differ from each other as regards the nature of the aggregate contained in the mix and/or the colouring before they are fed to the abovementioned formwork for the vacuum vibrocompression step.

Specifically the two or more mixes are deposited in the form of layers at points spaced from each other on a rotating cylindrical support; the mixes, as they are deposited on the bottom of the cylinder, form layers which are superimposed on each other.

Preferably rotating vanes or fixed blades operate to ensure the homogenization of the layers which are deposited in succession, following which the final resultant mix is transferred to the aforementioned formwork.

All this technology is intended for the manufacture of articles in the form of slabs which are similar as far as possible to natural stone material, this material, in the case of granite and marble, having varying colours and in particular a veined effect. In fact, observing a slab of granite or marble, especially a finished and therefore smoothed and polished slab, it can be noted how this slab very often has two or more components with a different colour and size.

When the subsequent vacuum vibrocompression step is applied on the layer of mix deposited on the temporary support or mould, which is of a layer with a small thickness, removal of the air from the mix prepared at atmospheric pressure occurs in a manner which is more than satisfactory owing to the presence of the vacuum before and during the pressing action and the simultaneous vibration imparted to the mass of the mix.

WO-A-00/43192 describes an apparatus for making slabs of stone material with a station consisting of an upper feeding section and a lower section with a vibrating formwork below the upper section. The formwork consists of one or more vertical moulding chambers having a closed bottom and arranged vertically. The mix is fed by the upper section and deaerated while it falls under vacuum into the moulding chambers through their open upper ends.

Also worth mention is the German patent DE-A-1 584 545 where the manufacture of tiles involves the use of vacuum during the compression of the ceramic material.

Hitherto, however, in the case of the manufacture of high quality and non-porous blocks, with the technology available industrially it has been possible in practice to manufacture articles composed of mixes which are substantially monochromatic.

A specific problem which has remained substantially unsolved is that of feeding the final mix to the formwork in such a way as to avoid as far as possible the incorporation of air inside the mass of the mix before it fills the formwork and which therefore has considerable dimensions.

In fact, when blocks with dimensions of about 3 x 1.5 x 1 metres must be manufactured, it is practically impossible to remove, prior to the vacuum vibrocompression step, the air incorporated in the mass of the mix prepared and discharged at atmospheric pressure, to the detriment of the characteristics and properties of the resultant sheets after sawing of the finished block.

DE-A-2 437 411 discloses a plant for manufacturing blocks according to the preamble of claim 5 and refers to a moulding technique of articles made of concrete with a high density and low permeability due to a relatively low ratio water/cement (max 38%) and makes use of an apparatus comprising a dosing drawer which is arranged with an underlying mould inside a sealably closable room. The mix is firstly poured under atmospheric pressure into the drawer then falls through the bottom of the drawer into the mould while a vacuum is created in the said room.

### SUMMARY OF THE INVENTION

The main object of the present invention is to provide a method and a plant for manufacturing blocks, in which the aesthetic and chromatic characteristics of natural stone materials are reproduced, both in terms of mixture of inclusions of varying sizes and in terms of varying colours and/or shades of colour, and in which the abovementioned problem of incorporation of air inside the mix before it is deposited on the formwork is also solved.

This object is achieved with a method for manufacturing blocks of conglomerate stone or ceramic material obtained from a mix comprising a granulated stone, stone-like or ceramic material of selected particle size and a hardening binder, the method comprising the steps of the appended claim 1, including the deaeration of the final mix before it falls into a formwork.

In the preferred embodiment of the method according to the present invention, said vacuum deaeration is performed by feeding said final mix, in the condition in which it arrives from said step involving preparation under atmospheric conditions, onto a conveyor belt which performs the displacement and discharging into a vacuum chamber.

The invention also includes a plant for manufacturing blocks of conglomerate stone, stone-like or ceramic material with the features of the appended claim 5.

In the preferred embodiment of the plant according to the present invention, said feeding section comprises a frame delimiting a chamber connected to a vacuum source, a hopper with a substantially vertical axis, to the inlet of which said final mix is supplied from said temporary support, said conveyor being positioned opposite the discharge opening of said hopper.

In the preferred embodiment of the present invention, said hopper has shaped internal walls so as to favour the deposition of the mix on the conveyor belt.

For further information on the shape of this hopper, reference may be made to the description and to the drawings in patent application TV2004A000118 filed on 20 October 2004 by the same Applicant (and corresponding to WO-A-2006/045728).

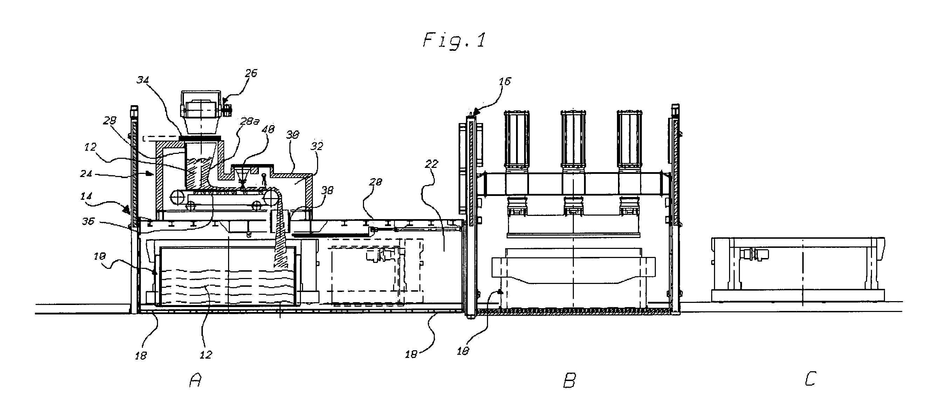

### BRIEF DESCRIPTION OF THE DRAWING

The particular features and advantages of the present invention will emerge more clearly from the description which follows of a preferred embodiment, provided by way of a non-limiting example, in connection with the accompanying drawing which shows schematically a side elevation view of the plant according to the present invention.

### DESCRIPTION OF AN EMBODIMENT

As shown, the plant comprises three sections, A, B and C respectively, section B of which performs vacuum vibrocompression of the material present in the formwork 10, while in section C removal of the formwork for transfer to the hardening step depending on the nature of the binder used in the mix is performed. For further details in connection with section B and the step which is performed in said section, reference may be made, for example, to the already cited Italian patent No. 1,181,570 **and** US patent No. 4,698,010**.**

Section A, instead, is intended to perform the step involving filling of the formwork 10 with the mix 12.

For this purpose, section A is delimited by two side walls 14 and 16 provided with openings for entry and exit of a carriage supporting the formwork, said openings respectively having gates able to sealingly close the respective openings.

A base 18, which extends over the entire length of the plant and is equipped with suitable rails, is envisaged for the travel movement of the carriage.

In section A, the walls 14, 16 and the base 18 define, together with a ceiling 20, a chamber 22 inside which filling of the formwork 10 is performed under a predefined vacuum, so that the chamber itself is connected to a suitable vacuum source.

The ceiling 20 has, mounted above it, the feeding section or, more precisely, the portion of the feeding section intended to perform deaeration of the mix before it is deposited in the formwork (section denoted overall by the reference number 24).

In the preferred embodiment of the present invention, the final mix, which is fed to the formwork after the deaeration step, consists of at least two initial mixes present in amounts which are equal or different from each other.

These mixes, preferably, are prepared from granular compositions which differ from each other as regards at least one characteristic (such as for example the colour and/or the particle size). These two mixes are combined with each other preferably in alternate layers using the technology described in the cited Italian patent No. 1,242,777 **and German patent No.** 4140 021**.**

The section for preparing the mixes in question under atmospheric conditions is not shown in the drawing and is positioned ahead (upstream) of the section 24 and is connected to it by suitable means, shown in the figure in the form of a **first** conveyor belt 26, which at its downstream end discharges the final mix 12 into the hopper 28.

The section 24 is delimited by a frame 30, associated with the ceiling 20e resting on it, said frame defining a chamber 32 which is also placed under a vacuum by means of connection to a vacuum pump (which may be the same and sole vacuum source of the entire plant) preferably with a residual pressure of 20-50 mbar.

The frame 30, opposite the inlet of the hopper 28, has an opening which can be sealingly closed by a gate 34.

The hopper 28, which has a vertical axis, has an inner wall 28a shaped so as to convey the mix 12 onto **a second** conveyor belt 36, preventing obstructions and blockages in the vicinity of the discharge outlet of the hopper, as described in more detail in the already cited patent. The second conveyor belt 36 lies under the hopper inside the said chamber 32 which is also placed under a vacuum.

The downstream end of the second conveyor belt 36 is situated opposite a pipe 38 for discharging the deaerated mix into the formwork 10 which, for this purpose, is made to perform an alternating movement inside the chamber 22, for uniform and controlled deposition of the mix inside the formwork.

Discharging of the final mix into the formwork occurs in a free falling manner so that the deaeration effect is further accentuated, in that any air still incorporated in the mix is released by the combined action of free discharging under a vacuum.

Obviously, in order to prevent the chamber 22 from communicating with the external atmosphere when the gate 34 is opened in order to discharge under atmospheric conditions the mix from the conveyor 26 into the hopper 28, which is preferably performed several times, a further sealed gate (not shown) is envisaged underneath the pipe 38.

The reference number 40 indicates a metering device, which allows the addition of further additives to the final mix before deposition inside the formwork, such as, for example, pigments for the colouring of the desired zones or for obtaining particular chromatic effects.

As for the second conveyor belt 36, this may be equipped with a disposable lining (for example made of paper) so as to prevent it becoming encrusted with the mix, or may be mounted on a movable carriage, so that it can be transferred outside the chamber 32 (which may be equipped with suitable access doors not shown) for cleaning operations at the end of one or more working cycles or when programmed maintenance of the plant is performed.

During operation of the plant according to the present invention, when the final mix, transported by the conveyor 26, enters into the hopper 28, it starts a travel path inside a vacuum environment which obviously causes extraction of the air incorporated in the mix during mixing. This extraction occurs firstly during displacement on the conveyor 36, where a fairly thin layer of mix is situated in the presence of the vacuum. This extraction of air occurs secondly during free discharging of the mix from the conveyor 36 to the formwork 10 via the pipe 38, so that at the end of the entire process, the air content of the mix contained in the formwork is negligible, if not non-existent.

Therefore, the present invention achieves a considerable improvement in the characteristics of the blocks produced - and therefore the final slabs - since air pockets, which could remain trapped in the thickness of the mix deposited in the formwork, are effectively eliminated.

At the same time it is possible to perform under atmospheric conditions the preparation of the initial mixes and combination thereof to form the final single mix using preferably the apparatus according to the already cited Italian patent No. 1,242,777, without the need to keep the mixers and the rotating support cylinder under a vacuum.

It is understood that modifications and variants can be developed within the scope of the appended claims.

Moreover, it is possible to envisage designing a plant comprising a single section B (and the following section C), the section B being able to be supplied along a vacuum path with formworks filled both using the deaeration section described above and using a set of vacuum mixers as described in WO-A-2006/122 093.

## Claims

1. Method for manufacturing blocks of conglomerate stone material comprising the steps of :
(a) preparation of at least one mix under atmospheric conditions, the mix comprising a granulated stone, stone-like or ceramic material of selected particle size and a hardening binder;
(b) deposition of said mix on a conveyor belt (36);
(c) deaeration of said mix by means of a vacuum while it is fed in a free falling manner from said conveyor belt (36) into a formwork (10) of suitable dimensions;
(d) vacuum vibrocompression of the mix contained in said formwork (10);
(e) hardening of the binder of the mix,
wherein also in step (b), in which said mix is deposited in a thin layer on the conveyor belt (36), before being fed to the formwork (10), takes place under vacuum.

2. Method according to Claim 1, **characterized in that** the mix fed to the formwork (10) is a final mix obtained from two or more initial mixes which are prepared under atmospheric conditions and are deposited in stratified form on said conveyor belt (36).

3. Method according to Claim 1, **characterized in that** the vacuum conditions at which the said steps (b) and (c) are performed correspond to a residual pressure of 20-50 mbar.

4. Method according to Claim 1, **characterized in that** additives are added onto the surface of said at least one mix while it is deposited under vacuum on the conveyor belt (36).

5. Plant for manufacturing blocks of conglomerate stone, stone-like or ceramic material, of the type comprising a section for preparing and feeding at least one mix, obtained by mixing under atmospheric conditions a granulated stone or ceramic material of selected particle size and a hardening binder, into a formwork of suitable dimensions, a section for vacuum vibrocompression of the mix contained in said formwork and a section for hardening the binder, **characterized in that** said feeding section comprises a conveyor belt **(36)** on which said mix is supplied and displaced, said conveyor belt **(36)** being mounted inside a chamber kept under a vacuum and communicating with the formwork **(10)** to be filled via a pipe **(38)** for discharging the mix in a free falling manner from the end of the said conveyor belt.

6. Plant according to Claim **5**, **characterized in that** the mix fed to the formwork (10) is a finial mix obtained from two or more initial mixes prepared under atmospheric conditions and deposited in stratified form on said conveyor belt **(36).**

7. Plant according to Claim **5, characterized in that** said feeding section comprises a frame **(30)** delimiting a chamber **(32)** connected to a vacuum source where are arranged a hopper **(28)** with a substantially vertical axis and the conveyor belt **(36)** which is positioned opposite the discharge opening of said hopper.

8. Plant according to Claim **5, characterized in that** said hopper **(28)** has a shaped inner wall (28a) so as to favour the deposition the mix on the conveyor belt **(36).**

9. Plant according to Claim **5**, **characterized in that** at least one metering device **(40)** for dispensing extra additives on the surface of the mix deposited on the conveyor belt **(36)** is mounted above said conveyor belt.

## Patentansprüche

1. Verfahren zum Herstellen von Blöcken eines Steingemischmaterials, mit den folgenden Schritten:
(a) Vorbereiten von zumindest einem Gemisch unter atmosphärischen Bedingungen, wobei das Gemisch ein granuliertes Stein-, steinartiges oder keramisches Material mit ausgewählter Partikelgröße und einen härtenden Binder aufweist;
(b) Ablagern des Gemischs auf einem Förderriemen (36);
(c) Entlüften des Gemischs mittels Unterdruck, während es in einer frei fallenden Art und Weise von dem Förderriemen (36) in eine Verschalung (10) mit geeigneten Maßen gefördert wird;
(d) Unterdruck-Vibrokomprimieren des Gemischs, das in der Verschalung (10) enthalten ist;
(e) Härten des Binders des Gemischs,
wobei auch bei Schritt (b), bei dem das Gemisch in einer dünnen Lage an dem Förderriemen (36) abgelagert wird, bevor es zu der Verschalung (10) gefördert wird, unter Unterdruck stattfindet.

2. Verfahren gemäß Anspruch 1, **dadurch gekennzeichnet, dass** das zu der Verschalung (10) geförderte Gemisch ein endgültiges Gemisch ist, das aus zwei oder mehreren Anfangsgemischen erhalten wird, die unter atmosphärischen Bedingungen vorbereitet werden und in geschichteter Form auf den Förderriemen (36) abgelagert werden.

3. Verfahren gemäß Anspruch 1, **dadurch gekennzeichnet, dass** die Unterdruckbedingungen, bei denen die Schritte (b) und (c) durchgeführt werden, einem Restdruck von 20 - 50 mbar entsprechen.

4. Verfahren gemäß Anspruch 1, **dadurch gekennzeichnet, dass** Additive auf die Oberfläche des zumindest einen Gemisches zugefügt werden, während es unter Unterdruck auf dem Förderriemen (36) abgelagert wird.

5. Anlage zum Herstellen von Blöcken eines Stein-, steinartigen oder keramischen Materialgemisches jener Art, die einen Bereich zum Vorbereiten und Fördern von zumindest einem Gemisch, das durch Mischen unter atmosphärischen Bedingungen eines granulierten Stein- oder keramischen Materials mit ausgewählter Partikelgröße und eines härtenden Binders in einer Verschalung mit geeignete Maßen erhalten wird, einen Bereich zum Unterdruck-Vibrokomprimieren des Gemischs, 1 das in der Verschalung enthalten ist, und einen Bereich zum Härten des Binders aufweist, **dadurch gekennzeichnet, dass** der Förderbereich einen Förderriemen (36) aufweist, 1 auf dem das Gemisch zugeführt und versetzt wird, wobei der Förderriemen (36) im Inneren einer Kammer angebracht ist, die auf einen Unterdruck gehalten wird und mit der Verschalung (10) in Verbindung ist, die über ein Rohr (38) zum Auslassen des Gemischs in einer frei fallenden Art und Weise von dem Ende des Förderriemens zu füllern ist.

6. Anlage gemäß Anspruch 5, **dadurch gekennzeichnet, dass** das Gemisch, das zu der Verschalung (10) gefördert wird, ein endgültiges Gemisch ist, das aus zwei oder mehreren Anfangsgemischen erhalten wird, die unter atmosphärischen Bedingungen vorbereitet und in geschichteter Form auf den Förderriemen (36) abgelagert werden.

7. Anlage gemäß Anspruch 5, **dadurch gekennzeichnet, dass** der Förderbereich einen Rahmen (30) aufweist, der eine Kammer (32) abgrenzt, die mit einer Unterdruckquelle verbunden ist, in der ein Trichter (28) mit einer im Wesentlichen vertikalen Achse und ein Förderriemen (36) angeordnet sind, der gegenüber der Auslassöffnung des Trichters positioniert ist.

8. Anlage gemäß Anspruch 5, **dadurch gekennzeichnet, dass** der Trichter (28) eine innerer Wand (28a) aufweist, die so geformt ist, dass sie für das Ablagern des Gemischs auf dem Förderriemen (36) günstig ist.

9. Anlage gemäß Anspruch 5, **dadurch gekennzeichnet, dass** zumindest eine Dosiervorrichtung (40) zum Abgeben von zusätzlichen Additiven auf die Oberfläche des Gemischs, das an dem Förderriemen (36) abgelagert wird, über dem Förderriemen angebracht ist.

## Revendications

1. Procédé pour fabriquer des blocs de pierre agglomérés comprenant les étapes consistant à :
(a) préparer au moins un mélange dans des conditions atmosphériques, le mélange comprenant une pierre granulée, un matériau de type pierre ou céramique granulé de taille particulaire sélectionnée et un liant de durcissement ;
(b) déposer ledit mélange sur une courroie transporteuse (36) ;
(c) supprimer l'air dudit mélange au moyen d'un vide alors qu'il est alimenté en chute libre de ladite courroie transporteuse (36) dans un coffrage (10) de dimensions appropriées ;
(d) comprimer par vibrations sous vide le mélange contenu dans ledit coffrage (10) ;
(e) faire durcir le liant du mélange,
dans lequel, également l'étape (b), dans laquelle ledit mélange est déposé sous forme d'une fine couche sur la courroie transporteuse (36), avant d'être alimenté au coffrage (10), a lieu sous vide.

2. Procédé selon la revendication 1, **caractérisé en ce que** le mélange alimenté au coffrage (10) est un mélange final obtenu à partir de deux mélanges initiaux ou plus qui sont préparés dans des conditions atmosphériques et sont déposés sous forme stratifiée sur ladite courroie transporteuse (36).

3. Procédé selon la revendication 1, **caractérisé en ce que** les conditions de vide auxquelles lesdites étapes (b) et (c) sont réalisées, correspondent à une pression résiduelle de 20 - 50 mbar.

4. Procédé selon la revendication 1, **caractérisé en ce que** l'on ajoute des additifs sur la surface dudit au moins un mélange alors qu'il est déposé sous vide sur la courroie transporteuse (36).

5. Installation pour fabriquer des blocs de pierre, un matériau de type pierre ou céramique agglomérés, du type comprenant une section pour préparer et alimenter au moins un mélange obtenu en mélangeant dans des conditions atmosphériques une pierre ou matériau en céramique granulé de taille particulaire sélectionnée et un liant de durcissement, dans un coffrage de dimensions appropriées, une section pour comprimer par vibrations sous vide le mélange contenu dans ledit coffrage et une section pour faire durcir le liant, **caractérisée en ce que** ladite section d'alimentation comprend une courroie transporteuse (36) sur laquelle ledit mélange est alimenté et déplacé, ladite courroie transporteuse (36) étant montée à l'intérieur d'une chambre maintenue sous vide et communiquant avec le coffrage (10) à remplir via un tuyau (38) pour décharger le mélange en chute libre à partir de l'extrémité de ladite courroie transporteuse.

6. Installation selon la revendication 5, **caractérisée en ce que** le mélange alimenté au coffrage (10) est un mélange final obtenu à partir de deux mélanges initiaux ou plus préparés dans des conditions atmosphériques et déposé sous forme stratifiée sur ladite courroie transporteuse (36).

7. Installation selon la revendication 5, **caractérisée en ce que** ladite section d'alimentation comprend un châssis (30) délimitant une chambre (32) raccordée à une source de vide où l'on agence une trémie (28) avec un axe sensiblement vertical et la courroie transporteuse (36) qui est positionnée à l'opposé de l'ouverture de décharge de ladite trémie.

8. Installation selon la revendication 5, **caractérisée en ce que** ladite trémie (28) a une paroi interne formée (28a) afin de favoriser le dépôt du mélange sur la courroie transporteuse (36).

9. Installation selon la revendication 5, **caractérisée en ce qu'**au moins un dispositif de dosage (40) pour distribuer des additifs supplémentaires sur la surface du mélange déposé sur la courroie transporteuse (36) est monté au-dessus de ladite courroie transporteuse.
